# EUROPÄISCHE PATENTSCHRIFT

(11) **EP 2 160 431 B1**
(45) Veröffentlichungstag und Bekanntmachung des Hinweises auf die Patenterteilung: **13.07.2011**
(21) Anmeldenummer: 08760827.9
(22) Anmeldetag: 11.06.2008
(51) Int. Cl.: C08G 69/06, C08G 69/30

(54) **Verfahren zur Herstellung von Polyamiden in Extrudern**
Method for the production of polyamides in extruders
Procédé de production de polyamides dans des extrudeuses

(30) Priorität: 20.06.2007 EP 07110660
(43) Veröffentlichungstag der Anmeldung: 10.03.2010
(73) Patentinhaber: BASF SE, 67056 Ludwigshafen (DE)
(72) Erfinder: DESBOIS, Philippe, 68535 Edingen-Neckarhausen (DE); KOPIETZ, Michael, 67269 Grünstadt (DE); NEUHAUS, Ralf, 69124 Heidelberg (DE); STAWITZKI, Hagen, 76137 Karlsruhe (DE); WEIS, Hans-Joachim, 67346 Speyer (DE); ENGELMANN, Jochen, 67434 Neustadt (DE)
(86) Internationale Anmeldenummer: PCT/EP2008/057273
(87) Internationale Veröffentlichungsnummer: WO 2008/155271

(56) Entgegenhaltungen:
- DE-A1- 4 329 676
- DE-A1- 19 514 145
- US-A- 4 831 108

## Beschreibung

Die Erfindung betrifft Verfahren zur Herstellung eines Polyamids auf Basis von Dicarbonsäuren und Diaminen in einem Extruder.

Die Herstellung von Polyamiden auf Basis von Dicarbonsäuren und Diaminen in einem Extruder ist prinzipiell bekannt. So beschreibt die DE-A-195 14 145 die Herstellung eines Polymeren auf der Basis einer Dicarbonsäure und einem Diamin durch Polykondensation mit einem Extruder, in dem man eine feste Dicarbonsäure/Diamin-Mischung zunächst in einem gegenläufigen Doppelschneckenextruder unter autogenem Druck erhitzt und anschließend den Austrag in einen gleichläufigen Doppelschneckenextruder überführt, in dem erst Restwasser sowie Wasser aus der Polykondensation durch Entgasungsöffnungen entfernt werden.

Als Dicarbonsäuren werden die üblichen Dicarbonsäuren genannt, wobei Adipinsäure bevorzugt ist. Als Diamin wird neben anderen Diaminen Hexamethylendiamin als bevorzugt genannt. Besonders bevorzugt setzt man Hexamethylendiammoniumadipat (AH-Salz) ein.

Die EP-A-0 667 367 betrifft teilaromatische Copolyamidformmassen mit hoher Kristallinität. Die Polyamidformmassen sind aus Dicarbonsäuren von Diaminen aufgebaut und enthalten Terephthalsäure, Isophthalsäure, Hexamethylendiamin und aliphatische cyclische Diamine als Grundbausteine. Sie werden kontinuierlich durch Durchleiten durch einen Röhrenverdampfer mit nachgeschaltetem Abscheider hergestellt.

Die EP-A-0 693 515 betrifft ein Verfahren zur Herstellung von Vorkondensaten teilkristalliner oder amorpher, thermoplastisch verarbeitbarer teilaromatischer Polyamide, wobei zunächst Salze aus den Diaminen und Dicarbonsäuren hergestellt werden, die sodann in einem Autoklaven mit Nachkondensation umgesetzt werden.

Bei der diskontinuierlichen Herstellung teilaromatischer Copolyamide kommt es leicht zu einer Verstopfung des Kessels durch Ablagerungen, zu deren Entfernung die Anlage stillgelegt werden muss. Zudem wird in der Regel kein einheitliches Produkt erhalten.

Es besteht daher Nachfrage nach einem Verfahren zur Herstellung von teilaromatischen Copolyamiden, bei denen die Belagsbildung der Kessel oder Herstellungsapparate vermieden werden kann und einheitliche Produkte zugänglich sind.

Aufgabe der vorliegenden Erfindung ist die Bereitstellung eines Verfahrens zur kontinuierlichen Herstellung teilaromatischer Copolyamide, das mit geringen Verweilzeiten arbeitet und eine hohe Viskosität der Copolyamide zulässt. Zudem soll ein möglichst einheitliches Produkt zugänglich sein, und eine Verunreinigung der Apparaturen soll vermieden werden.

Die Aufgabe wird erfindungsgemäß gelöst durch ein Verfahren zur Herstellung eines Polyamids auf Basis von Dicarbonsäuren und Diaminen in einem Extruder, dadurch gekennzeichnet, dass man ein festes Monomerengemisch aus 50 mol-% Dicarbonsäuregemisch aus 60 bis 88 Gew.-% Terephthalsäure und 12 bis 40 Gew.-% Isophthalsäure, in dem auch bis zu 20 Gew.-% des Dicarbonsäuregemisches durch andere Dicarbonsäuren ersetzt sein können, und 50 mol-% Hexamethylendiamin, das bis zu 20 Gew.-% durch andere C₂₋₃₀-Diamine ersetzt sein kann, in einem gleichläufigen Doppelschneckenextruder für eine Verweilzeit von 10 Sekunden bis 30 Minuten auf eine Temperatur im Bereich von 150 bis 400 °C unter Entfernung von Wasserdampf und gegebenenfalls Diaminen durch Entgasungsöffnungen erhitzt.

Es wurde erfindungsgemäß gefunden, dass teilkristalline und teilaromatische Polyamide in vorteilhafter Weise in einem Extruder hergestellt werden können, in dem ein festes Gemisch der Ausgangsmonomere (in der Regel in Salzform) erwärmt und umgesetzt wird. Durch den Einsatz eines Extruders wird eine kurze Verweilzeit erreicht, so dass die Entstehung von Nebenprodukten wirksam verhindert bzw. vermindert werden kann. Zudem erlaubt der Extruder auch die Herstellung von Copolyamiden mit hoher Viskosität, ohne dass es zur Bildung von Belägen oder einer Verstopfung der Apparatur kommt.

Das erfindungsgemäße Verfahren geht von einem festen Gemisch aus, das ein Monomerengemisch enthält. Das feste Gemisch kann noch weitere Inhaltsstoffe enthalten wie Fasern, Füllstoffe, Farbstoffe oder Hilfsstoffe. Typischerweise liegt das Monomeregemisch in Salzform vor, wobei vor der Umsetzung im Extruder das bei der Salzbildung entstehende Wasser möglichst vollständig entfernt wird. Verbleibendes Restwasser kann im Extruder durch Entgasungsöffnungen entfernt werden. Typische Wassergehalte für ein festes Monomerengemisch liegen im Bereich von 5 bis 30 Gew.-%, bevorzugt 10 bis 20 Gew.-% des Monomerengemisches.

Das Monomerengemisch besteht aus 50 mol-% Dicarbonsäurengemisch und 50 mol-% Diamin oder Diamingemisch. Das Dicarbonsäuregemisch besteht aus 60 bis 88 Gew.-% Terephthalsäure und 12 bis 40 Gew.-% Isophthalsäure. Vorzugsweise liegen 64 bis 80 Gew.-%, insbesondere 64 bis 76 Gew.-% Terephthalsäure vor und entsprechen vorzugsweise 20 bis 36 Gew.-% und insbesondere 24 bis 36 Gew.-% Isophthalsäure. Ferner können auch bis zu 20 Gew.-% des Dicarbonsäuregemisches durch andere Dicarbonsäuren ersetzt sein. Bevorzugt sind dies 0 bis 10 Gew.-%, insbesondere 0 bis 5 Gew.-%. Sofern ein Teil des Dicarbonsäuregemisches durch andere Dicarbonsäuren ersetzt ist, liegt die Untergrenze der anderen Komponente vorzugsweise bei 0,5 Gew.-%, insbesondere bei 1 Gew.-%. Andere geeignete Dicarbonsäuren sind beispielsweise Adipinsäure, Pimelinsäure, Korksäure, Acelainsäure und Sebacinsäure sowie 7-Sulfoisophthalsäure.

Als Diaminkomponente wird Hexamethylendiamin eingesetzt, das bis zu 20 Gew.-% durch andere C₂₋₃₀-Diamine ersetzt sein kann. Bevorzugt sind 0 bis 10 Gew.-%, insbesondere 0 bis 5 Gew.-% des Hexamethylendiamins durch andere C₂₋₃₀-Diamine ersetzt. Sofern andere C₂₋₃₀-Diamine vorliegen, beträgt ihre Mindestmenge vorzugsweise 0,5 Gew.-%, insbesondere mindestens 1 Gew.-%. Geeignete weitere Diamine sind beispielsweise Tetramethylendiamin, Octamethylendiamin, Decamethylendiamin und Dodecamethylendiamin sowie m-Xylylendiamin, Bis-(4-aminophenyl)methan, Bis-(4-aminophenyl)propan-2,2 und Bis-(4-aminocyclohexyl)methan oder Mischungen davon.

Als zusätzliches Diamin wird vorzugsweise Bis(4-aminocyclohexyl)methan eingesetzt, das unter der Bezeichnung Dicycan von der BASF AG erhältlich ist.

Vorzugsweise werden neben Terephthalsäure, Isophthalsäure und Hexamethylendiamin keine anderen Dicarbonsäuren oder Diamine eingesetzt.

Die Umsetzung wird erfindungsgemäß in einem gleichläufigen Extruder durchgeführt, der Entgasungsöffnungen aufweist. Geeignete Extruder sind dem Fachmann bekannt und beispielsweise in DE-A-195 14 145 beschrieben.

Die Verweilzeit im Extruder beträgt 10 Sekunden bis 30 Minuten, vorzugsweise 10 Sekunden bis 20 Minuten, insbesondere 30 Sekunden bis 5 Minuten.

Die Umsetzung erfolgt bei einer Temperatur im Bereich von 150 bis 400 °C, vorzugsweise 200 bis 330 °C. Speziell kann die Temperatur 250 bis 330 °C, insbesondere 260 bis 330 °C betragen.

Der Druck im Extruder stellt sich von selbst ein und wird darüber hinaus auch über den Anteil an über die Entgasungsöffnungen entfernten Wasserdampf und Diamin eingestellt.

Vorzugsweise werden das aus den Entgasungsöffnungen abgeführte Diamin und Wasser zumindest teilweise kondensiert, und das so erhaltene Diamin wird in den Extruder zurückgeführt. Beispielsweise können die Austräge aus den Entgasungsöffnungen zusammengefasst und in einer Kolonne aufgetrennt werden, wobei über Kopf Wasserdampf abgezogen wird, während im Sumpf ein Diamin/Wasser-Kondensat ausgeschleust und in den Extruder zurückgeführt wird.

Erfindungsgemäß ist es möglich, eine Compoundierung mit Fasern, Füllstoffen, Farbstoffen oder Hilfsstoffen direkt im Extruder durchzuführen. Dazu werden die Fasern, Füllstoffe, Farbstoffe, Hilfsstoffe oder deren Gemische zusätzlich zum Monomerengemisch direkt dem Extruder zugeführt. Hierdurch lassen sich weitere Verarbeitungsschritte einsparen.

An die erfindungsgemäße Extrusion können sich weitere Verarbeitungsschritte wie eine Festphasen-Nachkondensation und ein Granulierungsschritt anschließen. Diese Verfahren sind an sich bekannt und beispielsweise in der eingangs aufgeführten Literatur beschrieben.

Fasern und Füllstoffe sind beispielsweise in der EP-A-0 667 367 als Komponente (B) aufgeführt. Zur Herstellung von Polyamidblends ist es auch möglich, beispielsweise Kautschuk-elastische Polymerisate zuzusetzen. Diese sind in der EP-A-0 667 367 als Komponente (C) beschrieben.

Auch übliche Zusatzstoffe wie Stabilisatoren und Oxidationsverzögerer, Mittel gegen Wärmezersetzung, Zersetzung durch ultraviolettes Licht, Gleit- und Entformungsmittel, Farbstoffe, Pigmente und Weichmacher sind in der EP-A-0 667 367 beschrieben. Die erfindungsgemäß hergestellten Polyamide haben vorzugsweise eine Glasübergangstemperatur im Bereich von 110 bis 150 °C und eine Schmelztemperatur im Bereich von 280 bis 320 °C. Sie weisen vorzugsweise eine Kristallinität von mehr als 20 % auf und sind nicht transparent.

Die Herstellung des Monomerengemisches kann beispielsweise durch Trocknung wässriger Monomerenlösungen, durch Ausfällung bei Verminderung der Temperatur oder durch Entgasung eines Teils des Wassers oder durch Vermischen getrennter Salze erfolgen.

Die Erfindung wird durch die nachfolgenden Beispiele näher erläutert.

### Beispiele

### Beispiel 1:

Mit 368.57 g Wasser wurden 196,07 g Hexamethylendiamin (HMD)-Lösung (69,8 %ige in Wasser, BASF), 9,78 g Dicycan (BASF), 141,58 Terephthalsäure, 61,78 g Isophthalsäure (Lonza) in einem Kunststoff-Behälter bei 90 °C vermischt.

Die erhaltene Lösung wurde schließlich in eine Aluminium-Schale gegossen und auf 50 °C gekühlt. Bei Erreichen von 40 °C wurde das feuchte Salz unter Vakuum (N₂-Strom) bei 40 °C für eine Nacht getrocknet.

Das Salz wurde in einem DSM-Midiextruder bei 330 °C Außentemperatur und 80 Upm extrudiert (Bypass zu).

Die Werte von Tm, Tg, TkB, dH, VZ wurden anschließend für das erhaltene Copolyamid gemessen.

### Beispiele 2 bis 5:

Beispiel 1 wurde wiederholt mit dem Unterschied, dass die Polymerschmelze nicht sofort ausgetragen wurde. Der Bypass wurde für eine gewisse Zeit (= Verweilzeit) geöffnet, dann wurde das Polymer ausgetragen.

| Beispiel | Verweilzeit [min] | VZ [ml/g] | AEG [mmol/g] | Tg₂ [°C] | Tm₂ [°C] | T_{KB} [°C] | dH₂ [°C] |
|---|---|---|---|---|---|---|---|
| 1 | 0 | 9,6 | 651 | 114 | 305 | 289 | 45 |
| 2 | 1 | 19 | 139 | 124 | 307/322 | 291 | 50 |
| 3 | 3 | 24 | 39 | 124 | 309/327 | 291 | 44 |
| 4 | 6 | 27,7 | 35 | 125 | 311/326 | 290 | 52 |
| 5 | 20 | 29,7 | 38 | 125 | 305/322 | 290 | 68 |

Die relative geringe VZ kann durch einen HMD-Verlust erklärt werden. Höhere VZ können einfach erreicht werden durch Zugabe von HMD oder Rezyklierung des Brüdens.

## Patentansprüche

1. Verfahren zur Herstellung eines Polyamids auf Basis von Dicarbonsäuren und Diaminen in einem Extruder, **dadurch gekennzeichnet, dass** man ein festes Monorrierengemisch aus 50 mol-% Dicarbonsäuregemisch aus 60 bis 88 Gew.-% Terephthalsäure und 12 bis 40 Gew.-% Isophthalsäure, in dem auch bis zu 20 Gew.-% des Dicarbonsäuregemisches durch andere Dicarbonsäuren ersetzt sein können, und 50 mol-% Hexamethylendiamin, das bis zu 20 Gew.-% durch andere C₂₋₃₀-Diamine ersetzt sein kann, in einem gleichläufigen Doppelschneckenextruder für eine Verweilzeit von 10 Sekunden bis 30 Minuten auf eine Temperatur im Bereich von 150 bis 400 °C unter Entfernung von Wasserdampf und gegebenenfalls Diaminen durch Entgasungsöffnungen erhitzt.

2. Verfahren nach Anspruch 1, **dadurch gekennzeichnet, dass** man auf eine Temperatur im Bereich von 200 °C bis 330°C erhitzt.

3. Verfahren nach Anspruch 1 oder 2, **dadurch gekennzeichnet, dass** man aus den Entgasungsöffnungen abgeführtes Diamin und Wasser zumindest teilweise kondensiert und das so erhaltende Diamin in den Extruder zurückführt.

4. Verfahren nach einem der Ansprüche 1 bis 3, **dadurch gekennzeichnet, dass** die Verweilzeit 30 Sekunden bis 5 Minuten beträgt.

5. Verfahren nach einem der Ansprüche 1 bis 4, **dadurch gekennzeichnet, dass** zusätzlich zum Monomerengemisch Fasern, Füllstoffe, Farbstoffe, Hilfsstoffe oder deren Gemische direkt dem Extruder zur Compoundierung zugeführt werden.

6. Verfahren nach einem der Ansprüche 1 bis 5, **dadurch gekennzeichnet, dass** sich an die Extrusion eine Festphasen-Nachkondensation und ein Granulierungsschritt anschließen.

7. Verfahren nach einem der Ansprüche 1 bis 6, **dadurch gekennzeichnet, dass** das Dicarbonsäuregemisch aus 64 bis 80 Gew.-% Terephthalsäure und 20 bis 36 Gew.-% Isophthalsäure besteht, wobei 0 bis 5 Gew.-% des Dicarbonsäuregemisches durch andere Dicarbonsäuren ersetzt sein können.

## Claims

1. A process for preparing a polyamide based on dicarboxylic acids and diamines in an extruder, which comprises heating a solid monomer mixture composed of 50 mol% of dicarboxylic acid mixture composed of from 60 to 88% by weight of terephthalic acid and from 12 to 40% by weight of isophthalic acid, in which up to 20% by weight of the dicarboxylic acid mixture may also be replaced by other dicarboxylic acids, and 50 mol% of hexamethylenediamine which may be up to 20% by weight replaced by other C₂₋₃₀-diamines, in a corotatory twin-screw extruder for a residence time of from 10 seconds to 30 minutes, to a temperature in the range from 150 to 400°C while removing steam and if appropriate diamines through venting orifices.

2. The process according to claim 1, wherein the mixture is heated to a temperature in the range from 200°C to 330°C.

3. The process according to claim 1 or 2, wherein diamine and water removed from the venting orifices are condensed at least partly, and the diamine thus obtained is recycled into the extruder.

4. The process according to any of claims 1 to 3, wherein the residence time is from 30 seconds to 5 minutes.

5. The process according to any of claims 1 to 4, wherein fibers, fillers, dyes, assistants or mixtures thereof are fed directly to the extruder for compounding in addition to the monomer mixture.

6. The process according to any of claims 1 to 5, wherein the extrusion is followed by a solid-phase postcondensation and a granulation step.

7. The process according to any of claims 1 to 6, wherein the dicarboxylic acid mixture consists of from 64 to 80% by weight of terephthalic acid and from 20 to 36% by weight of isophthalic acid, where from 0 to 5% by weight of the dicarboxylic acid mixture may be replaced by other dicarboxylic acids.

## Revendications

1. Procédé de fabrication d'un polyamide à base d'acides dicarboxyliques et de diamines dans une extrudeuse, **caractérisé en ce qu'**un mélange solide de monomères de 50 % en moles d'un mélange d'acides dicarboxyliques de 60 à 88 % en poids d'acide téréphtalique et 12 à 40 % en poids d'acide isophtalique, jusqu'à 20 % en poids du mélange d'acides dicarboxyliques pouvant également être remplacé par d'autres acides dicarboxyliques, et 50 % en moles d'hexaméthylènediamine, qui peut être remplacée jusqu'à 20 % en poids par d'autres diamines en C₂₋₃₀, est porté à une température dans la plage allant de 150 à 400°C dans une extrudeuse bivis co-rotative pendant un temps de séjour de 10 secondes à 30 minutes, avec élimination de la vapeur d'eau et éventuellement des diamines par des ouvertures de dégazage.

2. Procédé selon la revendication 1, **caractérisé en ce que** le chauffage est réalisé à une température dans la plage allant de 200°C à 330°C.

3. Procédé selon la revendication 1 ou 2, **caractérisé en ce que** la diamine et l'eau déchargées par les ouvertures de dégazage sont condensées au moins en partie et la diamine ainsi obtenue est recyclée dans l'extrudeuse.

4. Procédé selon l'une quelconque des revendications 1 à 3, **caractérisé en ce que** le temps de séjour est de 30 secondes à 5 minutes.

5. Procédé selon l'une quelconque des revendications 1 à 4, **caractérisé en ce que** des fibres, des charges, des colorants, des adjuvants ou leurs mélanges sont introduits directement dans l'extrudeuse en plus du mélange de monomères pour la formulation.

6. Procédé selon l'une quelconque des revendications 1 à 5, **caractérisé en ce qu'**une condensation secondaire en phase solide et une étape de granulation suivent l'extrusion.

7. Procédé selon l'une quelconque des revendications 1 à 6, **caractérisé en ce que** le mélange d'acides dicarboxyliques est constitué de 64 à 80 % en poids d'acide téréphtalique et 20 à 36 % en poids d'acide isophtalique, 0 à 5 % en poids du mélange d'acides dicarboxyliques pouvant être remplacé par d'autres acides dicarboxyliques.
